# EUROPÄISCHE PATENTANMELDUNG

(11) **EP 2 088 543 A1**
(43) Veröffentlichungstag der Anmeldung: **12.08.2009**
(21) Anmeldenummer: 08002318.7
(22) Anmeldetag: 08.02.2008
(51) Int. Cl.: G06Q 10/00, G06Q 30/00, G07C 9/00

(54) **Verfahren zur Beanspruchung von Hotel- oder Event-Dienstleistungen**

(71) Anmelder: SkiData AG, 5083 Grödig/Salzburg (AT)
(72) Erfinder: Pamminger, Herbert, 4814 Neukirchen (AT); Fox, Dirk, 83483 Bischofswiesen (DE); Ponert, Gregor, 5020 Salzburg (AT); Lippert, Johannes, 5360 St. Wolfgang (AT)
(74) Vertreter: Haft, von Puttkamer, Berngruber

(57) **Zusammenfassung**

Es wird ein Verfahren zur Beanspruchung von Hotel- oder Event-Dienstleistungen vorgeschlagen, im Rahmen dessen anhand einer RFID- bzw. NFC -Interaktion zwischen einem RFID- bzw. NFC-fähigen tragbaren Gerät bzw. einem Mobiltelefon des Benutzers und einem Smartposter, umfassend ein RFID- bzw. NFC-Label ein aktivierbarer Link an das tragbare Gerät bzw. an das Mobiltelefon übermittelt wird, wobei nach Aktivierung des Links der Benutzer mit dem Check-In System des Hotels bzw. des Eventdienstleistungsanbieters verbunden wird, wobei für den Fall einer bereits gebuchten Dienstleistung die Identifizierung des Benutzers anhand seines Vor- und Nachnamens, einer bei der Buchung angegebenen Kreditkartennummer, der Buchungsnummer und/oder seiner Telefonnummer erfolgt und wobei für den Fall einer nicht bereits gebuchten Dienstleitung menügesteuert eine Buchung durchgeführt werden kann.

## Beschreibung

Die vorliegende Erfindung bezieht sich auf ein Verfahren zur Beanspruchung von Hotel- oder Event-Dienstleistungen gemäß dem Oberbegriff des Patentanspruchs 1.

Aus dem Stand der Technik ist bekannt, RFID-Technologie zur Bereitstellung von Informationen auf einem mobilen Kommunikationsgerät, beispielsweise auf einem Mobiltelefon zu verwenden. Ferner ist bekannt, durch eine berührungslose RFID-Interaktion zwischen einem Smartposter und einem RFIDfähigen Gerät Informationen an das RFID-fähige Gerät zu übertragen.

In der Regel wird hierbei als RFID-Technologie NFC - Technologie eingesetzt (NFC - Technologie steht für Near-Field-Communication - Technologie, die bekannterweise eine auf RFID-Funktechnologie basierende Funktechnologie für kurze Distanzen ist).

Der vorliegenden Erfindung liegt die Aufgabe zugrunde, ein Verfahren zur Beanspruchung von Hotel- oder Event-Dienstleistungen zur Verfügung zu stellen, durch dessen Durchführung die Abwicklung der Beanspruchung dieser Dienstleistungen vereinfacht und beschleunigt wird.

Die Beanspruchung von Hotel- oder Event-Dienstleistungen im Sinne der Erfindung kann auch die Bestellung, die Buchung sowie die Bezahlung der Dienstleistungen umfassen.

Diese Aufgabe wird durch die Merkmale des Patentanspruchs 1 gelöst. Weitere erfindungsgemäße Ausgestaltungen und Vorteile gehen aus den Unteransprüchen hervor.
Demnach wird im Rahmen des Verfahrens zur Beanspruchung von Hotel- oder Event-Dienstleistungen vorgeschlagen, für den Fall einer bereits gebuchten Dienstleistung, anhand einer RFID- bzw. NFC -Interaktion zwischen einem RFID- bzw. NFC-fähigen tragbaren Gerät bzw. einem Mobiltelefon des Benutzers und einem Smartposter, umfassend ein RFID- bzw. NFC-Label ein aktivierbarer Link an das tragbare Gerät bzw. an das Mobiltelefon übermittelt wird, wobei nach Aktivierung des Links der Benutzer mit dem Check-In System des Hotels bzw. des Eventdienstleistungsanbieters verbunden wird, wobei die Identifizierung des Benutzers anhand seines Vor- und Nachnamens, einer bei der Buchung angegebenen Kreditkartennummer, der Buchungsnummer und/oder seiner Telefonnummer - falls bei der Buchung angegeben oder übermittelt - erfolgt.

Das tragbare Gerät im Sinne der Erfindung kann beispielsweise ein Notebook oder ein PDA sein, wobei es vorzugsweise auch eine GSM-basierte Kommunikation ermöglicht bzw. die Funktionalität eines Mobiltelefons aufweist.

Die Aktivierung des Links erfolgt mittels eines Mobilfunknetzes, mittels WLAN, Bluetooth ® oder über eine andere berührungslose Verbindungstechnologie.

Anschließend werden für den Fall einer Hoteldienstleistung, die Zimmernummer und der Zimmerschlüssel (d.h. die Zutrittsberechtigung) in elektronischer Form an das tragbare Gerät bzw. an das Mobiltelefon des Benutzers übermittelt.

Gemäß einer Ausführungsform der Erfindung umfasst der elektronische Schlüssel (d.h. die Zutrittsberechtigung) einen ein- oder zweidimensionalen Barcode und/oder eine eineindeutige Ziffern-Buchstaben-Kombination sowie optional weitere zur Schlüsselprüfung relevante Ticketdaten, welche eine Offline - Verifikation des Schlüssels ermöglichen. Daten die eine Offline - Verifikation ermöglichen können beispielsweise das Ausstellungsdatum des Schlüssels, die Gültigkeitsdauer etc.

Hierbei kann vorgesehen sein, dass der Barcode von einer Zimmerzutrittskontrolleinrichtung, die einen Scanner umfasst, direkt vom Display des tragbaren Gerätes bzw. des Mobiltelefons des Benutzers eingelesen wird und mit dem im Check-In System abgelegten Barcode verglichen wird, so dass im Falle einer Übereinstimmung dem Benutzer auf diese Weise der Zutritt in das Zimmer gewährt wird.

Alternativ dazu kann der Barcode bzw. die eineindeutige Ziffern-Buchstaben-Kombination mittels einer RFID- bzw. NFC-Interaktion vom tragbaren Gerät bzw. vom Mobiltelefon des Benutzers an die Zimmerzutrittskontrolleinrichtung übertragen werden, wobei nach erfolgter Auswertung anhand eines Vergleichs mit den im Check-In System abgelegten Daten dem Benutzer der Zutritt in das Zimmer gewährt wird.

Des weiteren können der Barcode bzw. die eineindeutige Ziffern-Buchstaben-Kombination und weitere zur Überprüfung der Zutrittsberechtigung relevante Daten, welche eine Offline - Verifikation des Schlüssels bzw. der Zutrittsberechtigung ermöglichen, mittels einer RFID- bzw. NFC-Interaktion vom tragbaren Gerät bzw. vom Mobiltelefon des Benutzers an eine Zutrittskontrolleinrichtung übertragen werden, wobei nach erfolgter Offline - Überprüfung dieser Daten dem Benutzer der Zutritt gewährt wird.

Besonders vorteilhaft ist es, wenn das zumindest eine Smartposter, umfassend das RFID- bzw. NFC-Label im Hotelparkhaus oder in einem mit dem Hotel assoziierten Parkhaus vorgesehen ist; beispielsweise kann das Smartposter an der Parkhauseinfahrt angebracht sein. Gemäß weiterer Ausgestaltungen der Erfindung kann ein derartiges Smartposter in Flughäfen und/oder Bahnhöfen etc. vorgesehen sein.

Für den Fall einer Eventdienstleistung, beispielsweise eines Kino- oder Theaterbesuchs wird gemäß der Erfindung vorgeschlagen, dass der Benutzer nach der Herstellung der Verbindung mit dem Check-In System des Eventdienstleistungsanbieters menügesteuert seine gewünschten Plätze für den gewünschten Event auswählt, wobei die entsprechende Zutrittsberechtigung in elektronischer Form an das tragbare Gerät bzw. an das Mobiltelefon des Benutzers übermittelt wird. Optional kann vorgesehen sein, dass zusätzlich zur Zutrittsberechtigung eine Wegbeschreibung zum gebuchten Platz an das tragbare Gerät bzw. an das Mobiltelefon des Benutzers übermittelt wird.

Die Zutrittsberechtigung umfasst einen ein- oder zweidimensionalen Barcode und/oder eine eineindeutige Ziffern-Buchstaben-Kombination, wobei der Barcode von einer Zutrittskontrolleinrichtung umfassend einen Scanner direkt vom Display des tragbaren Gerätes bzw. des Mobiltelefons des Benutzers eingelesen wird und mit dem im Check-In System abgelegten Barcode verglichen wird, so dass im Falle einer Übereinstimmung dem Benutzer auf diese Weise der Zutritt für den gebuchten Event gewährt wird.

Alternativ dazu kann der Barcode bzw. die eineindeutige Ziffern-Buchstaben-Kombination mittels einer RFID- bzw. NFC-Interaktion vom tragbaren Gerät bzw. vom Mobiltelefon des Benutzers an die Zutrittskontrolleinrichtung übertragen werden, wobei nach erfolgter Auswertung dem Benutzer der Zutritt gewährt wird.

Erfindungsgemäß kann sowohl für den Fall von Hoteldienstleistungen als auch für den Fall von Eventdienstleistungen der Benutzer nach erfolgtem Check-In über im tragbaren Gerät bzw. Mobiltelefon gespeicherten Kreditkarten- oder Bankverbindungsdaten, über eine Direktbezahlung über die Telefonnummer des Mobiltelefons, oder durch Auslösen einer Kreditkartentransaktion durch Auslesen der Kreditkartendaten von einer maschinenlesbaren oder RFID-lesbaren Kreditkarte bezahlen.

Des weiteren kann erfindungsgemäß vorgesehen sein, dass der Zimmerschlüssel und die Zutrittsberechtigung von einem tragbaren Gerät bzw. Mobiltelefon auf ein anderes tragbare Gerät bzw. Mobiltelefon, beispielsweise über SMS oder Bluetooth ® übertragbar sind, wobei für den Fall einer Zutrittsberechtigung pro Zutrittsberechtigung vorzugsweise lediglich einmal Einlass gewährt wird, um Missbrauch zu vermeiden.

In vorteilhafter Weise kann das zumindest eine Smartposter, umfassend das RFID- bzw. NFC-Label in einem mit dem Eventveranstalter assoziierten Parkhaus vorgesehen sein; beispielsweise kann das Smartposter an der Parkhauseinfahrt angebracht sein. In diesem Fall kann mit der Bezahlung für den Event auch die Parkgebühr entrichtet werden.

Gemäß weiterer Ausgestaltungen der Erfindung kann ein derartiges Smartposter im Ort der Eventdienstleitung, beispielsweise in einem Kino vorgesehen sein. Des weiteren ist es möglich, dass ein RFID- bzw. NFC-Label enthaltend einen zum Check-In System des Eventveranstalters führenden aktivierbaren Link in Magazinen, Werbebroschüren etc. enthalten ist. Hierbei kann der Link einen Promotion-Code enthalten bzw. nach dessen Aktivierung eine vergünstigte oder kostenlose Buchung ermöglichen.

Gemäß einem weiteren Aspekt der Erfindung kann für den Fall einer nicht bereits gebuchten Hotel- oder Eventdienstleistung, anhand einer RFID- bzw. NFC - Interaktion zwischen einem RFID- bzw. NFC-fähigen tragbaren Gerät bzw. einem Mobiltelefon des Benutzers und einem Smartposter, umfassend ein RFID- bzw. NFC-Label ein aktivierbarer Link an das tragbare Gerät bzw. an das Mobiltelefon übermittelt werden, wobei nach Aktivierung des Links der Benutzer mit dem Check-In System des Hotels bzw. des Eventdienstleistungsanbieters verbunden wird, so dass er menügesteuert eine Buchung durchführen kann. Die weitere Vorgehensweise entspricht der für den Fall einer vorliegenden Buchung geschilderten Vorgehensweise.

## Patentansprüche

1. Verfahren zur Beanspruchung von Hotel- oder Event-Dienstleistungen, **dadurch gekennzeichnet, dass** anhand einer RFID- bzw. NFC -Interaktion zwischen einem RFID- bzw. NFC-fähigen tragbaren Gerät bzw. einem Mobiltelefon des Benutzers und einem Smartposter, umfassend ein RFID- bzw. NFC-Label ein aktivierbarer Link an das tragbare Gerät bzw. an das Mobiltelefon übermittelt wird, wobei nach Aktivierung des Links der Benutzer mit dem Check-In System des Hotels bzw. des Eventdienstleistungsanbieters verbunden wird, wobei für den Fall einer bereits gebuchten Dienstleistung die Identifizierung des Benutzers anhand seines Vor- und Nachnamens, einer bei der Buchung angegebenen Kreditkartennummer, der Buchungsnummer und/oder seiner Telefonnummer erfolgt und wobei für den Fall einer nicht bereits gebuchten Dienstleitung menügesteuert eine Buchung durchgeführt werden kann.

2. Verfahren zur Beanspruchung von Hotel- oder Event-Dienstleistungen, nach Anspruch 1, **dadurch gekennzeichnet, dass** für den Fall einer Hoteldienstleistung, die Zimmernummer und der Zimmerschlüssel in elektronischer Form an das tragbare Gerät bzw. an das Mobiltelefon des Benutzers übermittelt werden.

3. Verfahren zur Beanspruchung von Hotel- oder Event-Dienstleistungen, nach Anspruch 2, **dadurch gekennzeichnet, dass** der elektronische Schlüssel einen ein- oder zweidimensionalen Barcode und/oder eine eineindeutige Ziffern-Buchstaben-Kombination umfasst.

4. Verfahren zur Beanspruchung von Hotel- oder Event-Dienstleistungen, nach Anspruch 3, **dadurch gekennzeichnet, dass** der Barcode von einer Zimmerzutrittskontrolleinrichtung, die einen Scanner umfasst, direkt vom Display des tragbaren Gerätes bzw. des Mobiltelefons des Benutzers eingelesen wird und mit dem im Check-In System abgelegten Barcode verglichen wird, so dass im Falle einer Übereinstimmung dem Benutzer auf diese Weise der Zutritt in das Zimmer gewährt wird.

5. Verfahren zur Beanspruchung von Hotel- oder Event-Dienstleistungen, nach Anspruch 3, **dadurch gekennzeichnet, dass** der Barcode bzw. die eineindeutige Ziffern-Buchstaben-Kombination mittels einer RFID- bzw. NFC-Interaktion vom tragbaren Gerät bzw. vom Mobiltelefon des Benutzers an eine Zimmerzutrittskontrolleinrichtung übertragen werden, wobei nach erfolgter Auswertung anhand eines Vergleichs mit den im Check-In System abgelegten Daten dem Benutzer der Zutritt in das Zimmer gewährt wird.

6. Verfahren zur Beanspruchung von Hotel- oder Event-Dienstleistungen, nach einem der vorangehenden Ansprüche, **dadurch gekennzeichnet, dass** das zumindest eine Smartposter, umfassend das RFID- bzw. NFC-Label im Hotelparkhaus, in einem mit dem Hotel assoziierten Parkhaus, in Flughäfen und/oder in Bahnhöfen vorgesehen ist.

7. Verfahren zur Beanspruchung von Hotel- oder Event-Dienstleistungen, nach Anspruch 1, **dadurch gekennzeichnet, dass** für den Fall einer Eventdienstleistung der Benutzer nach der Herstellung der Verbindung mit dem Check-In System des Eventdienstleistungsanbieters menügesteuert seine gewünschten Plätze für den gewünschten Event auswählt, wobei die entsprechende Zutrittsberechtigung in elektronischer Form an das tragbare Gerät bzw. an das Mobiltelefon des Benutzers übermittelt wird, wobei zusätzlich zur Zutrittsberechtigung optional eine Wegbeschreibung zum gebuchten Platz an das tragbare Gerät bzw. an das Mobiltelefon des Benutzers übermittelt wird.

8. Verfahren zur Beanspruchung von Hotel- oder Event-Dienstleistungen, nach Anspruch 7, **dadurch gekennzeichnet, dass** die Zutrittsberechtigung einen ein- oder zweidimensionalen Barcode und/oder eine eineindeutige Ziffern-Buchstaben-Kombination und optional weitere zur Überprüfung der Zutrittsberechtigung relevante Daten, welche eine Offline - Verifikation der Zutrittsberechtigung ermöglichen, umfasst.

9. Verfahren zur Beanspruchung von Hotel- oder Event-Dienstleistungen, nach Anspruch 8, **dadurch gekennzeichnet, dass** der Barcode von einer Zutrittskontrolleinrichtung, die einen Scanner umfasst, direkt vom Display des tragbaren Gerätes bzw. des Mobiltelefons des Benutzers eingelesen wird und mit dem im Check-In System abgelegten Barcode verglichen wird, so dass im Falle einer Übereinstimmung dem Benutzer auf diese Weise der Zutritt gewährt wird.

10. Verfahren zur Beanspruchung von Hotel- oder Event-Dienstleistungen, nach Anspruch 8, **dadurch gekennzeichnet, dass** der Barcode bzw. die eineindeutige Ziffern-Buchstaben-Kombination mittels einer RFID- bzw. NFC-Interaktion vom tragbaren Gerät bzw. vom Mobiltelefon des Benutzers an eine Zutrittskontrolleinrichtung übertragen werden, wobei nach erfolgter Auswertung anhand eines Vergleichs mit den im Check-In System abgelegten Daten dem Benutzer der Zutritt gewährt wird.

11. Verfahren zur Beanspruchung von Hotel- oder Event-Dienstleistungen, nach Anspruch 8, **dadurch gekennzeichnet, dass** der Barcode bzw. die eineindeutige Ziffern-Buchstaben-Kombination und weitere zur Überprüfung der Zutrittsberechtigung relevante Daten, welche eine Offline - Verifikation der Zutrittsberechtigung ermöglichen, mittels einer RFID- bzw. NFC-Interaktion vom tragbaren Gerät bzw. vom Mobiltelefon des Benutzers an eine Zutrittskontrolleinrichtung übertragen werden, wobei und nach erfolgter Offline - Überprüfung dieser Daten dem Benutzer der Zutritt gewährt wird.

12. Verfahren zur Beanspruchung von Hotel- oder Event-Dienstleistungen, nach Anspruch 7, 8, 9, 10 oder 11, **dadurch gekennzeichnet, dass** das zumindest eine Smartposter, umfassend das RFID- bzw. NFC-Label in einem mit dem Eventveranstalter assoziierten Parkhaus und/oder im Ort der Eventdienstleitung angebracht bzw. vorgesehen ist.

13. Verfahren zur Beanspruchung von Hotel- oder Event-Dienstleistungen, nach Anspruch 7, 8, 9, 10 oder 11, **dadurch gekennzeichnet, dass** ein RFID- bzw. NFC-Label enthaltend einen zum Check-In System des Eventveranstalters führenden aktivierbaren Link in Magazinen und/oder Werbebroschüren enthalten ist.

14. Verfahren zur Beanspruchung von Hotel- oder Event-Dienstleistungen, nach Anspruch 13, **dadurch gekennzeichnet, dass** der Link einen Promotion-Code enthält bzw. nach dessen Aktivierung eine vergünstigte oder kostenlose Buchung ermöglicht.

15. Verfahren zur Beanspruchung von Hotel- oder Event-Dienstleistungen, nach einem der vorangehenden Ansprüche, **dadurch gekennzeichnet, dass** eine Bezahlung nach erfolgtem Check-In über im tragbaren Gerät bzw. Mobiltelefon gespeicherten Kreditkarten- oder Bankverbindungsdaten, über eine Direktbezahlung über die Telefonnummer des Mobiltelefons, oder durch Auslösen einer Kreditkartentransaktion durch Auslesen der Kreditkartendaten von einer maschinenlesbaren oder RFID-lesbaren Kreditkarte erfolgt.

16. Verfahren zur Beanspruchung von Hotel- oder Event-Dienstleistungen, nach einem der vorangehenden Ansprüche, **dadurch gekennzeichnet, dass** die Aktivierung des Links mittels eines Mobilfunknetzes, mittels WLAN, Bluetooth ® oder über eine andere berührungslose Verbindungstechnologie erfolgt.

17. Verfahren zur Beanspruchung von Hotel- oder Event-Dienstleistungen, nach einem der vorangehenden Ansprüche, **dadurch gekennzeichnet, dass** der Zimmerschlüssel bzw. die Zutrittsberechtigung von einem tragbaren Gerät bzw. Mobiltelefon auf ein anderes tragbare Gerät bzw. Mobiltelefon übertragbar sind.

18. Verfahren zur Beanspruchung von Hotel- oder Event-Dienstleistungen, nach Anspruch 17, **dadurch gekennzeichnet, dass** für den Fall einer Zutrittsberechtigung pro Zutrittsberechtigung lediglich einmal Einlass gewährt wird, um Missbrauch zu vermeiden.
